# FASCICULE DE BREVET EUROPEEN

(11) **EP 0 860 115 B1**
(45) Date de publication et mention de la délivrance du brevet: **27.08.2003**
(21) Numéro de dépôt: 98440016.8
(22) Date de dépôt: 05.02.1998
(51) Int. Cl.: A01L 5/00, A01L 7/02

(54) **Dispositif pour protégér les sabots d'un cheval**
Schutzvorrichtung für Pferdehufe
Device for protecting a horse's hoof

(30) Priorité: 06.02.1997 FR 9701523
(43) Date de publication de la demande: 26.08.1998
(73) Titulaire: Lieby, Jean-Paul, 68290 Dolleren (FR)
(72) Inventeur: Lieby, Jean-Paul, 68290 Dolleren (FR)
(74) Mandataire: Burkard, Thierry

(56) Documents cités:
- EP-A- 0 832 560
- WO-A-98/24312
- DE-C- 63 681
- GB-A- 224 407
- GB-A- 285 549

## Description

La présente invention concerne un dispositif pour protéger les sabots des chevaux, contre l'usure et les chocs, tout en préservant et améliorant l'adhérence sur tous types de terrains.

L'équitation de loisirs, d'extérieur et de sport, couvre des activités aussi variées que la randonnée équestre, le concours complet, l'endurance équestre et l'attelage.

Les différents types de ferrage utilisés actuellement dans le but de protéger les sabots contre l'usure ou les chocs, présentent des inconvénients majeurs, au détriment de critères comme le confort du cheval et la sécurité du couple cheval-cavalier sur les différents types de terrains rencontrés en équitation d'extérieur.

La technique classique, qui consiste à appliquer un fer en acier directement sous le sabot, est utilisée pour plus 90% des ferrages actuels. Elle présente de multiples inconvénients. Sur un sol dur, elle répercute les ondes de choc dans les articulations des chevaux. Par ailleurs, elle induit un basculement du pied sur les talons pendant la durée du ferrage, compromettant ainsi le bon aplomb du pied. Ceci s'explique par le fait que lors de l'appui du pied sur le sol, la partie arrière du sabot (le talon) s'ouvre sur la pression de la fourchette qui est en appui sur le sol. Cette partie arrière n'est pas clouée, pour permettre son libre jeu. Le fer qui est cloué sur la partie médiane avant, donc fixé à la corne, autorise la repousse de celle-ci. Mais il faut déferrer et couper cette corne tous les 45 à 60 jours). Il s'ensuit que la partie médiane arrière, non clouée, s'use sur le fer de par son jeu d'ouverture et ne peut suivre la repousse de la partie avant.

Les fers classiques comportent parfois une partie surélevée formant butée, appelée la pince. Indépendamment de leur utilité, les pinces ont un effet très traumatisant pour l'intérieur du pied et peuvent être la cause de blessures ou de lésions. Les fers ne comportant pas de pinces exigent l'utilisation d'un plus grand nombre de clous, car ce sont alors uniquement ces clous qui maintiennent le fer latéralement. La pression exercée par les clous, qui passent près des chairs vives, comprime le pied du cheval tout en agrandissant les trous à force. Le ferrage risque donc de se desserrer.

Il existe également des « fers » en matériaux plastiques ou synthétiques. S'ils sont performant pour l'absorption des ondes de choc sur sol dur, ils présentent l'inconvénient d'être très glissants sur les terrains souples et humides. Cela est dû à l'usure en arrondi des bords du fer, qui forme un angle obtus favorisant le dérapage. D'autre part, l'absence de pince sur ce type de fers fait que ce sont les clous qui supportent toutes les pressions, et ce d'autant plus, que le plastique est très glissant sous la corne. Le soutien de talon de ces « fers » est parfois traumatisant pour la fourchette de l'animal parce que conçu uniquement pour maintenir les talons ensembles.

On connaît également des fers en aluminium. Ils assurent une bonne absorption des chocs, mais présentent par contre une très mauvaise résistance à l'usure. Ils ne comportent de soutien de talon.

D'autres inconvénients sont inhérents à toutes les techniques de ferrage connues.

Par exemple, en cas de pratique hivernale de l'équitation, la plupart des ferrages de type connu ne permettent pas d'éviter l'accumulation de la neige en boules très compactes dans le creux de la sole. Le cheval ne peut par conséquent, ni être monté ni même sorti au pré pour se défouler, au risque de se fouler les pieds.

Par ailleurs, avec les fers classiques, il n'y a aucune vision de la « ligne blanche » lors de la pose des fers sous le sabot, c'est-à-dire de la limite à ne pas dépasser vers l'intérieur pour les clous. On ne peut que clouer à l'aveugle dans les trous, sans jeu, au risque de toucher les chairs sensibles, surtout si le fer est trop petit et percé à «gras», c'est-à-dire avec les trous placés trop vers l'intérieur.

Des tentatives ont été faites par le passé pour remédier à ces divers inconvénients, en associant des semelles amortissantes et du silicone avec un ferrage classique. Ce procédé présente un défaut majeur : la sole et la fourchette du pied ne respirent plus, d'où un ramollissement excessif et un risque de pourrissement de la fourchette.

On connaît du document GB 285 549 A une semelle composite pour protéger les sabots des chevaux comportant une semelle métallique, un coussin élastique et un élément de renfort. L'élément de renfort est constitué par un câble métallique enroulé sur lui-même pour former des circonvolutions se recouvrant partiellement. La bande de maintien ainsi obtenue est logée à l'intérieur du coussin élastique.

L'utilisation d'inserts métalliques en renfort de la semelle d'un fer à cheval est également connue des documents DE 636 681, WO 98 24312 et EP 0 852 560.

En conclusion, s'il existe plusieurs dispositifs de protection de la corne du pied, c'est souvent au détriment du confort du cheval, du fonctionnement naturel du pied, et de son bon comportement en freinage et en adhérence sur sols durs (routes, pierres lisses), ou sur sols souples et glissants (prés argileux et mouillés).

La présente invention a pour but de fournir un dispositif de protection du sabot des chevaux préservant le confort de l'animal et la sécurité du couple cheval-cavalier sur tous les types de terrain rencontrés en équitation d'extérieur.

Ce but est atteint par l'association, dans un dispositif pour protéger les sabots des chevaux, constitué d'une semelle souple et d'une bande de maintien métallique, noyée dans la masse, caractérisé en ce que la bande est disposée dans un plan sensiblement perpendiculaire par rapport au plan de la semelle

Un dispositif de protection selon l'invention présente un certain nombre d'avantages.

La résistance à l'usure, est considérablement améliorée par l'association semelle souple - bande métallique intégrée. Cette bande peut par exemple mais pas obligatoirement, être en acier, de degré de dureté variable en fonction de l'utilisation projetée.

Au freinage, le pied du cheval ne doit pas bloquer ni déraper, en raison des risques de foulure ou de glissade. L'association de la semelle amortissante et de la bande métallique offre un compromis parfait pour remplir cette condition sur sol dur. Sur sol souple et glissant, c'est la bande en métal qui remplit ce rôle. Hors fers, c'est la corne extérieure et l'angle aigu formé avec la sole qui assure le freinage : le sabot attaque ce type de sol pour s'y enfoncer et s'y accrocher. La présente invention restitue ce même principe et le cheval n'est pas dérouté.

Le dispositif selon l'invention comporte aussi un soutien de fourchette, dessiné en fonction de l'anatomie du pied, qui assure la vascularisation du pied par la compression du coussinet plantaire.

La résistance de l'ensemble aux pressions latérales est assurée par des pinces souples non traumatisantes et adaptables à chaque forme de pied.

Le dispositif selon la présente invention comporte enfin un évidement sur sa semelle, agencé pour empêcher la formation de blocs entre la sole et les fers, en cas de monte par temps de neige.

L'invention est décrite ci-après à l'aide d'un exemple non limitatif de réalisation, et en référence aux dessins annexés, dans lesquels :

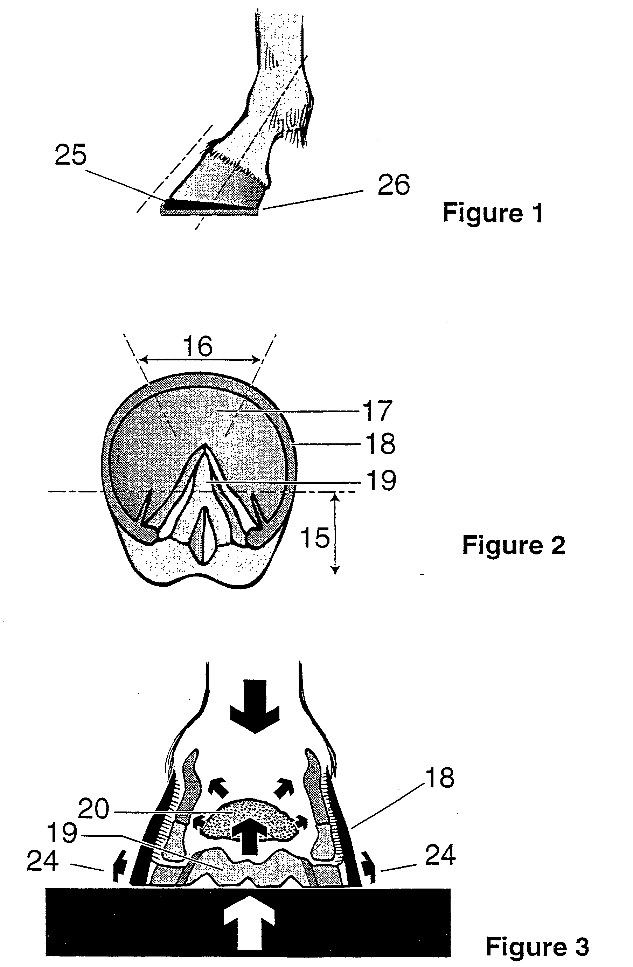

La figure 1 illustre les phénomènes de repousse de la corne et d'usure du talon sur le fer,
La figure 2 est une vue de dessous du sabot nu,
La figure 3 est une vue en coupe du pied du cheval, montrant l'appui de la fourchette, la vascularisation du pied par l'intermédiaire du coussinet plantaire, et l'écartement des talons,

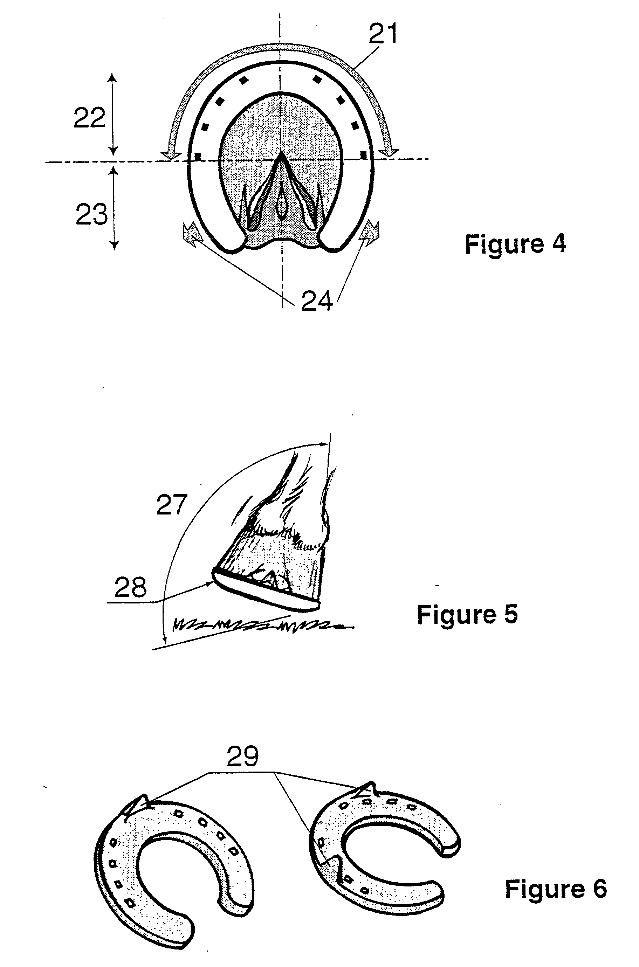

La figure 4 représente la zone de clouage d'un fer, la zone d'ouverture des talons et le jeu des talons,
La figure 5 illustre l'usure en arrondi d'un fer en plastique et l'angle obtus ainsi obtenu avec la paroi,
La figure 6 montre l'utilisation de pinces sur des fers classiques,

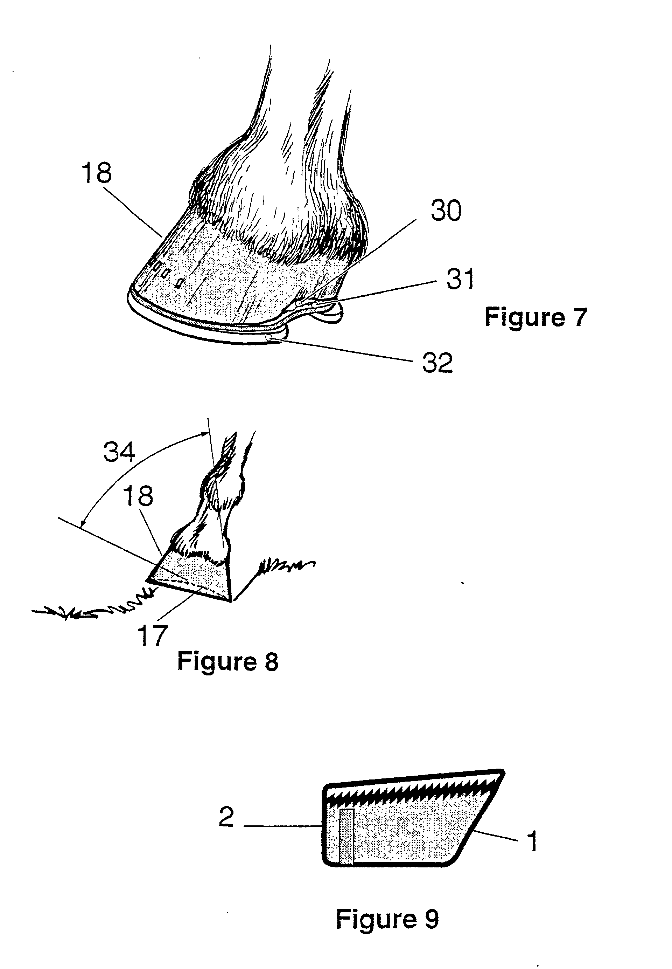

La figure 7 illustre le procédé consistant à intercaler une plaque amortissante entre le fer et le sabot par remplissage du creux de la sole avec du silicone,
La figure 8 représente l'angle aigu entre la sole et la paroi du sabot nu,
La figure 9 est une vue en coupe d'un coté de la semelle et de la bande métallique,
La figure 10 présente différentes vues en coupe de la semelle amortissante,
La figure 11 montre en coupe le positionnement de la bande de maintien métallique à l'intérieur de la semelle, et

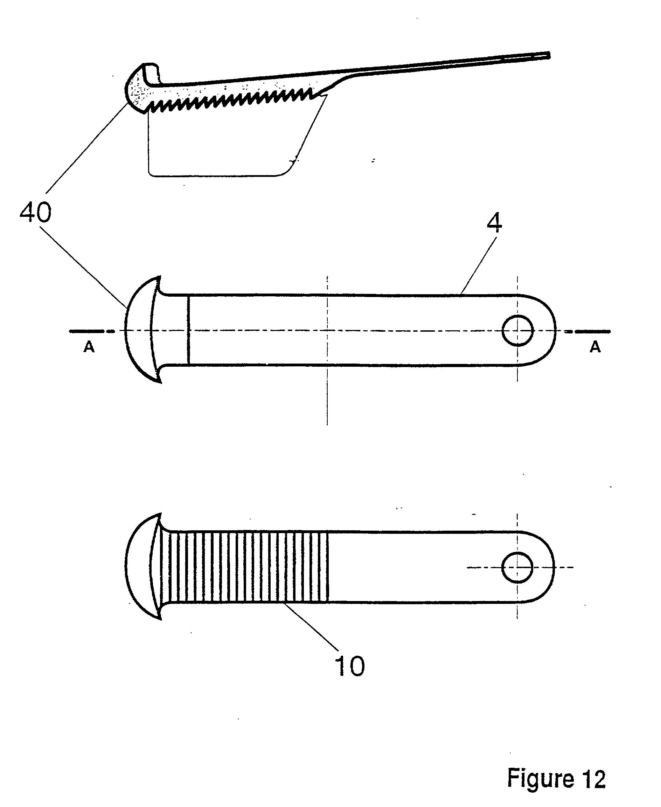

La figure 12 représente une pince souple crantée, respectivement vue de coté, du dessus et du dessous.

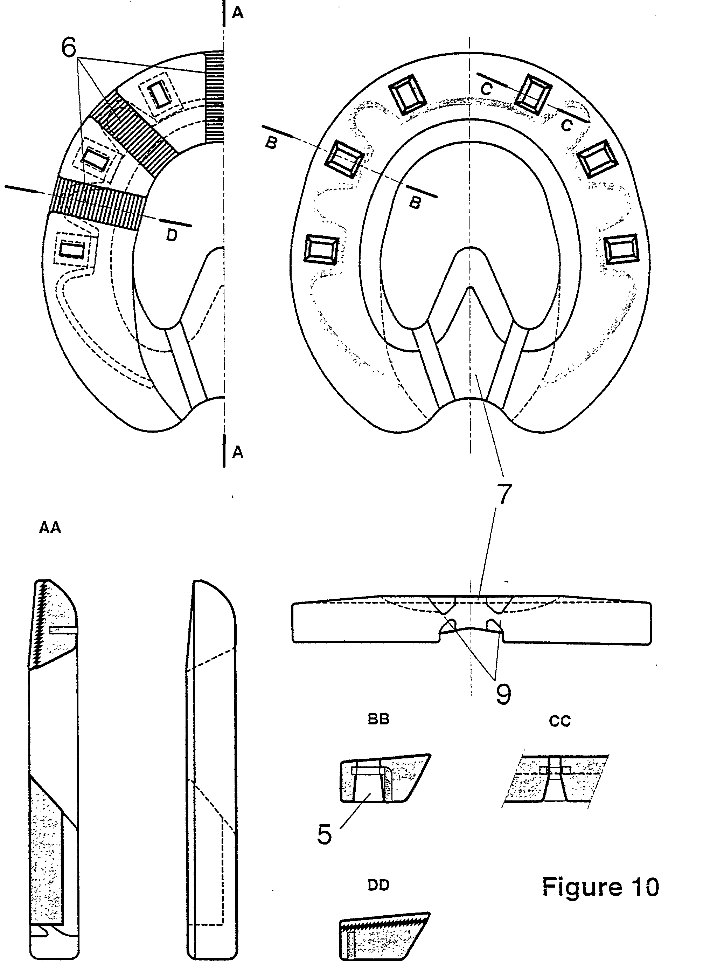

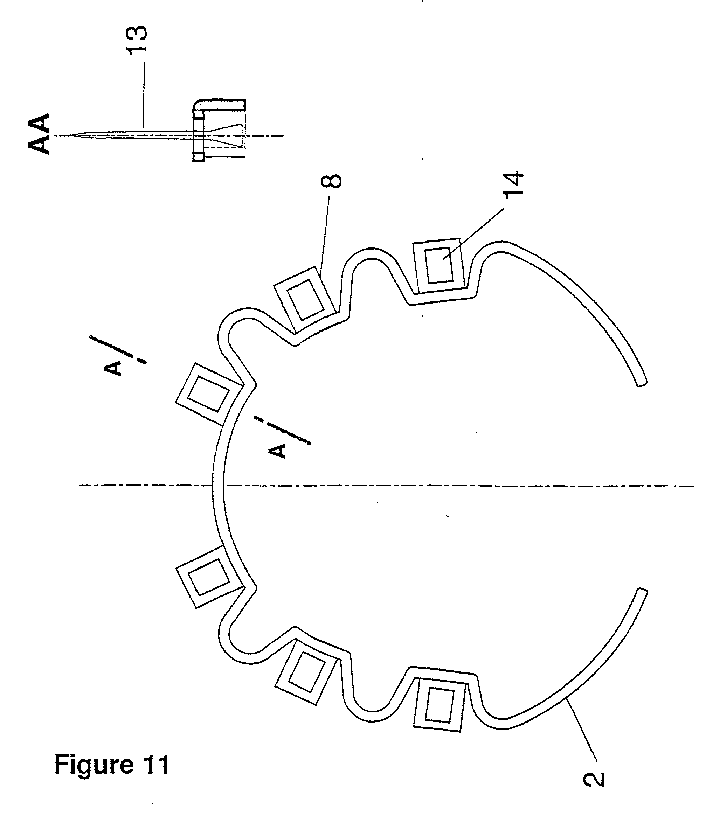

En référence aux dessins annexés, notamment les figures 10 et 11, le dispositif de protection selon l'invention, se compose respectivement, d'une semelle souple amortissante (1), d'une bande métallique (2) initialement droite, noyée dans la masse de la semelle amortissante (1).

Cette bande métallique (2) coopère avec six supports (8), venant en contact avec la semelle (1) et dirigés vers l'extérieur de la courbe en se plaçant dans six évidements (36) ménagés en correspondance sur ladite semelle.

Ces supports (8) présentent chacun une ouverture (14), en regard d'ouvertures (5) correspondantes dans la semelle (1), permettant la fixation de l'ensemble par clouage traditionnel sous le sabot, dans l'ordre : sabot, ensemble semelle (1) - bande métallique (2). Les ouvertures (5) sur la semelle (1) et (14) sur les supports (8), correspondantes entre elles, sont suffisamment larges pour autoriser, au travers de l'ensemble, semelle (1) - bande métallique (2), une vision de la ligne blanche au dessous du sabot pour un clouage précis.

Le soutien de fourchette (7) est reliée aux deux branches des talons de la semelle amortissante (1) par deux languettes en forme de V (9). Ce soutien (7) n'est pas en appui avec le sol, de sorte que, lors de l'appui de la fourchette (19) sur le soutien (7), en descendant, celui ci provoque l'écartement des deux branches du talon de la semelle (1), par l'intermédiaire des deux languettes (9). et ainsi restitue le jeu d'ouverture des talons du sabot (24), par les talons de la semelle (1), évitant par conséquent l'usure des talons du sabot (26), qui risquerait d'engendrer un mauvais aplomb du pied sur les deux mois de durée maximum du ferrage (25-26).

Les pinces de maintien latéral se présentent sous la forme de languettes souples (4), crantées sur leur longueur et en dessous (10). On peut utiliser jusqu'à huit pinces par pied, mais en pratique, quatre suffisent largement. Les pinces-languettes s'insèrent entre le sabot et la semelle (1) dans des logements (6) aménagés sur le dessus de ladite semelle. Les languettes (4) sont glissées de l'extérieur vers l'intérieur, pour venir en butée contre le sabot par leurs extrémités (40), dans un sens et sont bloquées dans l'autre sens, par l'orientation des crans (6 et 10) rendant ainsi l'ensemble semelle - bande acier résistant aux pressions latérales exercées sur le sabot.

La pose du dispositif selon l'invention se fait aisément et ne demande plus l'utilisation de la forge.

Chaque sabot est différent en taille et en forme, d'où l'importance de pouvoir effectuer des adaptations aisée et précise. La présente invention se décompose en cinq tailles dont les antérieurs (forme plus arrondie) et les postérieurs, (forme plus allongée). Il y a donc pour cinq tailles, dix formes différentes. Une fois le parage effectué, on choisit une taille (postérieur et antérieur) adaptée au cheval. Puis on pose la semelle (1) sous le pied en marquant au feutre les contours à réajuster. On adapte ensuite la partie extérieure de cette semelle (1) à la râpe. Enfin, on fixe l'ensemble au sabot de façon traditionnelle, en clouant au travers des évidements (14) et (5) puis on insère les languettes-pinces (4) sans serrer les fers. Après avoir ajusté les languettes pinces (4), il ne reste plus qu'à serrer l'ensemble en ajustant les clous et à terminer les rivets de ces derniers.

En conclusion, le dispositif de protection selon la présente invention reproduit le rôle de la corne dure extérieure du pied - la paroi - (18), en la remplaçant par la bande métallique (2), garantissant ainsi une bonne adhérence au dérapage et au freinage sur tous types de terrains.

Ceci est assuré par une bonne attaque du terrain, comme les carres d'un ski, de l'ensemble semelle - bande métallique, grâce à l'angle aigu (34) formé entre la paroi (18) et la sole (17) proche du pied naturel du cheval. Il assure un bon soutien de fourchette (7) tout en restituant le jeu d'ouverture des talons lors de chaque appui, apportant un confort au cheval et garantissant de bons aplombs en évitant l'usure des talons (23) sur les deux mois de pose. Il garantit également une bonne tenue de l'ensemble aux pressions latérales, en soulageant les clous et en évitant le pincement des chairs en conséquence des pressions latérales. Ce principe de pinces souples, matérialisé par des languettes (4), s'adapte à chaque forme de pied en permettant un maintien souple et non traumatisant, en quelque sorte comme le ferait une chaussure de taille adéquate.

La semelle (1) comporte par ailleurs un évidement central constitué d'un angle en dépouille supérieur à 90° destiné à empêcher la formation de boules de neige sous le sabot.

Le dispositif selon l'invention est particulièrement destiné à la protection des sabots des chevaux de randonnées, d'attelage, d'endurance et de concours complet, tout en assurant la résistance à l'usure, une bonne tenue en freinage et en adhérence sur tous types de terrains, un confort au pied du cheval en apportant un soutien de fourchette et en restituant le jeu du talon afin d'empêcher le basculement du pied sur les talons. Il assure un maintien confortable de l'ensemble sur le sabot aux pressions latérales, par le biais de languettes souples (4), disposées entre sabot et semelle, remplissant sans en présenter les inconvénients, le rôle joué par les pinces classiques.

## Revendications

1. Dispositif pour protéger les sabots des chevaux, constitué d'une semelle amortissante (1) et d'une bande de maintien métallique (2) noyée dans la masse de ladite semelle **caractérisé en ce que** la bande de maintien (2) est disposée dans un plan sensiblement perpendiculaire par rapport au plan de la semelle (1).

2. Dispositif suivant la revendication 1 **caractérisé en ce qu'**il comporte six supports (8), coopérant avec la bande de maintien (2) et dirigés vers l'extérieur, s'insérant dans six évidements (36) ménagés en correspondance sur la semelle amortissante (1).

3. Dispositif suivant la revendication 2, **caractérisé en ce que** les supports (8) présentent chacun une ouverture (14), correspondant à des ouvertures (5) sur la semelle (1), et prévues pour recevoir les clous destinés à fixer le dispositif sous le sabot du cheval.

4. Dispositif suivant l'une des revendications précédentes, **caractérisé en ce qu'**il comporte un soutien de fourchette (7) épousant l'anatomie du pied de l'animal, relié aux deux branches des talons de la semelle amortissante (1) et deux languettes en forme de V (9), de telle manière que lorsque la fourchette descend en appui sur ledit soutien, celui-ci provoque l'écartement des deux branches du talon de la semelle (1), par l'intermédiaire des deux languettes (9).

5. Dispositif suivant l'une des revendications précédentes, **caractérisé en ce qu'**il comporte au moins quatre pinces de maintien latéral insérées dans les logements (6), ménagés sur la partie supérieure de la semelle (1).

6. Dispositif suivant la revendication 5, **caractérisé en ce que** les pinces de maintien se présentent sous la forme de languettes souples (4), crantées sur leur longueur et en dessous (10).

## Patentansprüche

1. Vorrichtung zum Schutz von Pferdehufen, bestehend aus einer stoßdämpfenden Sohle (1) und einem Metallhalteband (2), das in die Masse der Sohle eingebettet ist, **dadurch gekennzeichnet, dass** das Halteband (2) in einer praktisch senkrechten Ebene zur Sohlenebene (1) angeordnet ist.

2. Vorrichtung nach Anspruch 1, **dadurch gekennzeichnet, dass** sie sechs Halterungen (8) aufweist, die mit dem Halteband (2) zusammenwirken und nach außen gerichtet sind, und die sich in sechs Aussparungen (36) einfügen, die entsprechend in der stoßdämpfenden Sohle (1) eingerichtet werden.

3. Vorrichtung nach Anspruch 2, **dadurch gekennzeichnet, dass** die Halterungen (8) jeweils eine Öffnung (14) aufweisen, die den Öffnungen (5) in der Sohle (1) entsprechen, und für die Aufnahme von Nägeln vorgesehen sind, die zur Befestigung der Vorrichtung unter dem Pferdehuf dienen.

4. Vorrichtung nach einem der vorausgehenden Ansprüche, **dadurch gekennzeichnet, dass** sie eine Hufstrahlstütze (7) aufweist, die sich der Anatomie des Fußes des Tieres anpasst, und über zwei V-förmige Federn (9) mit den beiden Schenkeln am Ende der stoßdämpfenden Sohle (1) verbunden ist, so dass, wenn der Hufstrahl auf die besagte Stütze abgesenkt wird, diese mittels der beiden Federn (9) das Spreizen der beiden Schenkel des Sohlenendes (1) bewirkt.

5. Vorrichtung nach einem der vorausgehenden Ansprüche, **dadurch gekennzeichnet, dass** sie mindestens vier Seitenkappen aufweist, die in die Aufnahmen (6) eingefügt werden, welche im oberen Bereich der Sohle (1) vorgesehen wurden.

6. Vorrichtung nach Anspruch 5, **dadurch gekennzeichnet, dass** diese Seitenkappen in Form von flexiblen Federn (4) vorliegen, die über ihre Länge und an der Unterseite gezahnt sind (10).

## Claims

1. Device for protecting a horse's hoof, comprised of a shock absorbing sole (1) and metallic holding strip (2) embedded in said sole, **characterised in that** the holding strip (2) is arranged in a plane which is significantly perpendicular in relation to the plane of the sole (1).

2. Device according to claim 1, **characterised in that** it comprises six supports (8), cooperating with the holding strip (2) and facing outwards, fitting into six recesses (36) arranged to match on the shock absorbing sole (1).

3. Device according to claim 2, **characterised in that** the supports (8) each have an opening (14) corresponding to openings (5) on the sole (1), which are designed to receive the nails intended to fix the device under the horse's hoof.

4. Device according to any of the previous claims, **characterised in that** it comprises a frog support (7) which moulds the shape of the animal's hoof, connected to the two branches of the heels on the shock absorbing sole (1) and two V-shaped tongues (9), so that when the frog lowers resting on such support, the latter causes the two branches of the heel of the sole (1) to part, by means of the two tongues (9).

5. Device according to any of the previous claims, **characterised in that** it comprises at least four lateral holding clips inserted in the housings (6), located on the upper part of the sole (1).

6. Device according to claim 5, **characterised in that** the holding clips come in the shape of flexible tongues (4) with notches over their whole length and underneath (10).
